Europäisches Patentamt

European Patent Office

Office européen des brevets

(19)

(11) Numéro de publication: **0 334 719**

**A1**

(12)

# DEMANDE DE BREVET EUROPEEN

(21) Numéro de dépôt: **89400709.5**

(22) Date de dépôt: **14.03.89**

(51) Int. Cl.4: **B 01 D 46/52**
**F 02 M 35/02**

(30) Priorité: **22.03.88 FR 8803729**

(43) Date de publication de la demande:
**27.09.89 Bulletin 89/39**

(84) Etats contractants désignés: **DE ES GB**

(71) Demandeur: **ECIA - EQUIPEMENTS ET COMPOSANTS POUR L'INDUSTRIE AUTOMOBILE**
**F-25400 Audincourt (Doubs) (FR)**

(72) Inventeur: **Clément, Pierre**
**44B rue de Montbéliard**
**F-25150 Pont-de-Roide (FR)**

**Gourlot, Thierry**
**14 rue Georges Cuvier**
**F-25230 Seloncourt (FR)**

(74) Mandataire: **Mestre, Jean et al**
**c/o CABINET LAVOIX 2, place d'Estienne d'Orves**
**F-75441 Paris Cédex 09 (FR)**

(54) **Filtre à air perfectionné pour moteurs thermiques.**

(57) Ce filtre comprend un corps (10) délimitant une cuve (101) à laquelle on accède par un orifice (102) fermé par un couvercle (103) et qui est destinée à recevoir une cartouche filtrante (20).

Ce filtre est caractérisé en ce que le corps (10) est fait de deux demi-coques (110,120) réunies suivant un plan de jonction (100) traversant la cuve (101), en ce que l'orifice (102) pour le passage de la cartouche filtrante (20) chevauche le plan de jonction (100) et en ce que des moyens de mise en place (30) sont portés par le corps (10) de manière à permettre l'insertion ou l'enlèvement de la cartouche (20) par une translation approximativement parallèle au plan de jonction (100) et sa mise en place ou son retrait par un déplacement approximativement perpendiculaire à ce plan de jonction (100).

Application aux moteurs de véhicules automobiles.

FIG. 3

EP 0 334 719 A1

**Description**

## Filtre à air perfectionné pour moteurs thermiques

La présente invention concerne les filtres et, plus particulièrement, les filtres à air utilisés en association avec des moteurs thermiques tels que des moteurs à explosion pour véhicule automobile.

Comme il est classique pour l'alimentation des moteurs thermiques tels que les moteurs d'automobiles utilisant essentiellement l'air comme comburant que l'on mélange à un carburant tel que de l'essence volatilisée, on filtre l'air de manière à le débarrasser des particules étrangères, notamment abrasives, qui risquent de détériorer, à l'usage, notamment les pistons et les cylindres en les rayant.

Les filtres à air pour ce type de moteur sont bien connus dans la technique.

A titre d'illustration on mentionnera la demande de brevet européen EP 0 152 513. Le filtre à air qui est décrit dans ce document comprend un corps cylindrique, fermé par un couvercle amovible, dans la cuve duquel est placée une cartouche filtrante amovible que l'on peut nettoyer ou changer lorsqu'elle est colmatée. La cartouche filtrante se présente à la manière d'un ensemble annulaire qui est déposé dans la cuve du corps du filtre. Ce corps de filtre est muni d'une tubulure d'entrée tangentielle et d'une tubulure de sortie centrale axiale. Comme on l'expose dans ce document, le couvercle qui ferme la cuve du corps est maintenu en place à l'aide d'un écrou à oreilles ou écrou papillon et d'une rondelle tous deux passés sur une tige filetée.

Les filtres à air qu'illustre remarquablement bien ce document sont tels que pour procéder au nettoyage ou à l'échange de la cartouche filtrante il faut d'abord desserrer les vis ou écrous qui maintiennent le couvercle sur la cuve du corps puis il faut ôter ce couvercle avant de pouvoir accéder à la cartouche filtrante et au joint d'étanchéité entre corps et couvercle, pour procéder à sa dépose. La cartouche filtrante étant nettoyée ou remplacée par une nouvelle, et celle-ci déposée dans la cuve, il faut remettre en place les joint et couvercle puis procéder à la fixation de ce dernier en replaçant les écrou et rondelle qu'il faut alors resserrer.

Toutes ces opérations nécessitent d'être conduites avec une certaine rigueur. Notamment il faut procéder à une mise en place correcte du ou des joints d'étanchéité et à leur remplacement si nécessaire. En effet, si ceci n'est pas fait ou mal fait, on peut observer une réduction des performances du moteur ou bien une diminution de sa longévité.

On comprend que de telles opérations nécessitent du personnel et de l'outillage spécialisé et qu'elles sont sujettes à erreur lors de la remise en place si ce n'est à la perte d'éléments par exemple la disparition des rondelles et vis ou écrous échappés et tombés dans la tubulure de sortie. Ces éléments risquent alors d'obstruer le carburateur voire d'endommager le moteur lui même s'ils parviennent jusqu'à lui.

Le but de l'invention est de remédier à ce type d'inconvénients de manière qu'un opérateur sans connaissance particulière et sans outillage spécialisé puisse procéder à une nettoyage ou à un remplacement de la cartouche filtrante d'une manière rapide et sûre.

On comprend donc tout l'intérêt de l'invention qui vise à offrir davantage de commodités que les filtres à air de la technique antérieure.

L'invention a pour but la construction d'un filtre à air perfectionnés pour moteur thermique et, plus particulièrement, pour moteurs de véhicule automobile, d'une construction telle que l'accès à la cartouche filtrante puisse s'effectuer facilement et sans outillage et sans aucun risque d'erreur.

Le filtre à air suivant l'invention, qui est de conception simple, est facile d'utilisation et de construction relativement économique, et présente aussi une grande surface de filtrage ce qui permet d'améliorer le rendement des moteurs thermiques. En outre la configuration de ce filtre est telle que son corps et sa cartouche filtrante se conjuguent de manière à autoriser un montage simple et correct de l'ensemble sans risque d'erreur.

L'invention a pour objet un filtre à air notamment pour moteur thermique constitué, entre autres, d'un corps délimitant une cuve intérieure à laquelle on accède par un orifice fermé par un couvercle mobile et où débouchent une tubulure d'entrée pour l'admission du gaz à filtrer et une tubulure de sortie pour l'évacuation du gaz filtré et destinée à recevoir une cartouche filtrante interchangeable faite d'un châssis-cadre avec un filtre proprement dit. Ce filtre à air est caractérisé en ce que le corps est fait de deux demi-coques réunies suivant un plan de jonction traversant la cuve, en ce que l'orifice d'introduction de la cartouche chevauche le plan de jonction et en ce que des moyens de mise en place sont portés par le corps de manière à permettre l'insertion ou l'enlèvement de la cartouche par une translation approximativement parallèle au plan de jonction et sa mise en place ou sont retrait par un déplacement approximativement perpendiculaire à ce plan de jonction.

D'autres caractéristiques de l'invention apparaîtront à la lecture de la description et des revendications qui suivent et à l'examen du dessin annexé, donné seulement à titre d'exemple où :

- la Fig.1 est une vue extérieure schématique avec un arraché partiel d'un mode de réalisation d'un filtre à air suivant l'invention ;

- les Fig.2A et 2B sont des sections partielles transversales de la Fig.1 selon le plan II-II où la demi-vue de gauche représente la cartouche insérée avant sa mise en place et la demi-vue de droite représente la cartouche insérée et mise en place ;

- la Fig.3 est une section partielle longitudinale par un plan perpendiculaire au plan de jonction montrant la cartouche insérée et mise en place dessinée, en trait continu, et en cours de mise en place en trait discontinu ;

- la Fig.4 est une vue analogue à celle de la Fig.3 d'un autre mode de réalisation où la demi-vue de gauche de la Fig.4A représente la cartouche insérée avant sa mise en place et la demi-vue de droite de la Fig.4B représente la cartouche insérée et mise en place ; et

- la Fig.5 est une vue de face schématique partielle orifice ouvert et cuve garnie d'une cartouche montrant la configuration particulière servant de détrompeur.

Les filtres à air pour moteurs d'automobile étant bien connus dans la technique, on ne décrira dans ce qui suit que ce qui concerne directement l'invention. Pur le surplus, le spécialiste de la technique considérée puisera dans les solutions classiques à sa disposition pour faire face aux problèmes particuliers auxquels il est confronté.

Dans la description qui suit on utilisera toujours le même numéro de référence pour désigner un élément homologue quel que soit le mode de réalisation où il est présent.

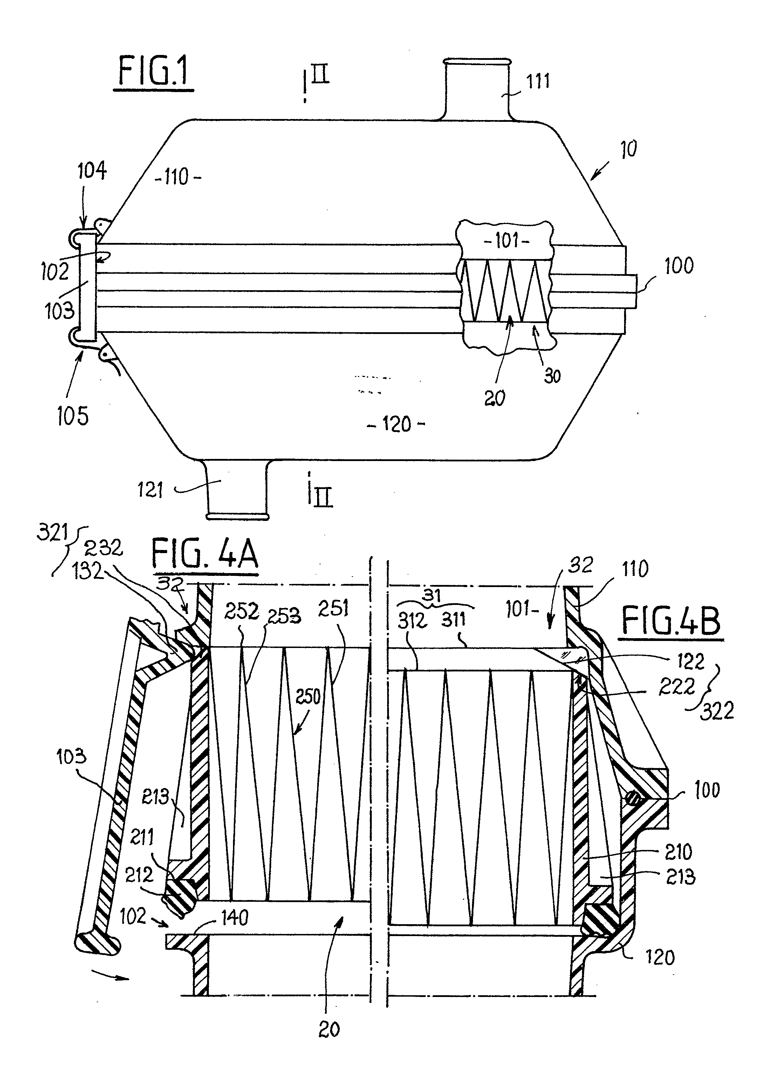

Comme on le voit en particulier sur la Fig.1, un filtre à air suivant l'invention comprend un corps 10 dans lequel est placée une cartouche filtrante 20 interchangeable grâce à des moyens de mise en place 30.

Comme on peut l'observer, le corps 10 est fait de deux demi-coques 110 et 120 réunies suivant un plan de jonction 100 approximativement médian de manière à délimiter une cuve 101 intérieure. Dans cette cuve 101 débouchent une tubulure d'entrée 111 et une tubulure de sortie 121.

Comme on peut l'observer, ces deux tubulures sont pratiquement disposées perpendiculairement au plan de jonction 100 et disposées approximativement symétriquement par rapport à un axe de ce dernier normal au plan de la figure. Mais ces tubulures peuvent aussi occuper une position différente choisie en fonction des impératifs d'implantation dans le compartiment moteur du véhicule.

On accède à la cuve 101 par un orifice 102 disposé à cheval sur le plan de jonction 100. Cet orifice 102 est clos par un couvercle 103 mobile qui est amovible ou articulé sur le corps.

Dans le mode de réalisation illustré sur la Fig.1 le couvercle 103 est articulé sur l'une des demi-coques du corps 100 par une ou des charnières 104. Ce couvercle est maintenu en position fermée par un fermoir 105, par exemple une ou des lames élastiques conformées de manière appropriée, comme il est classique.

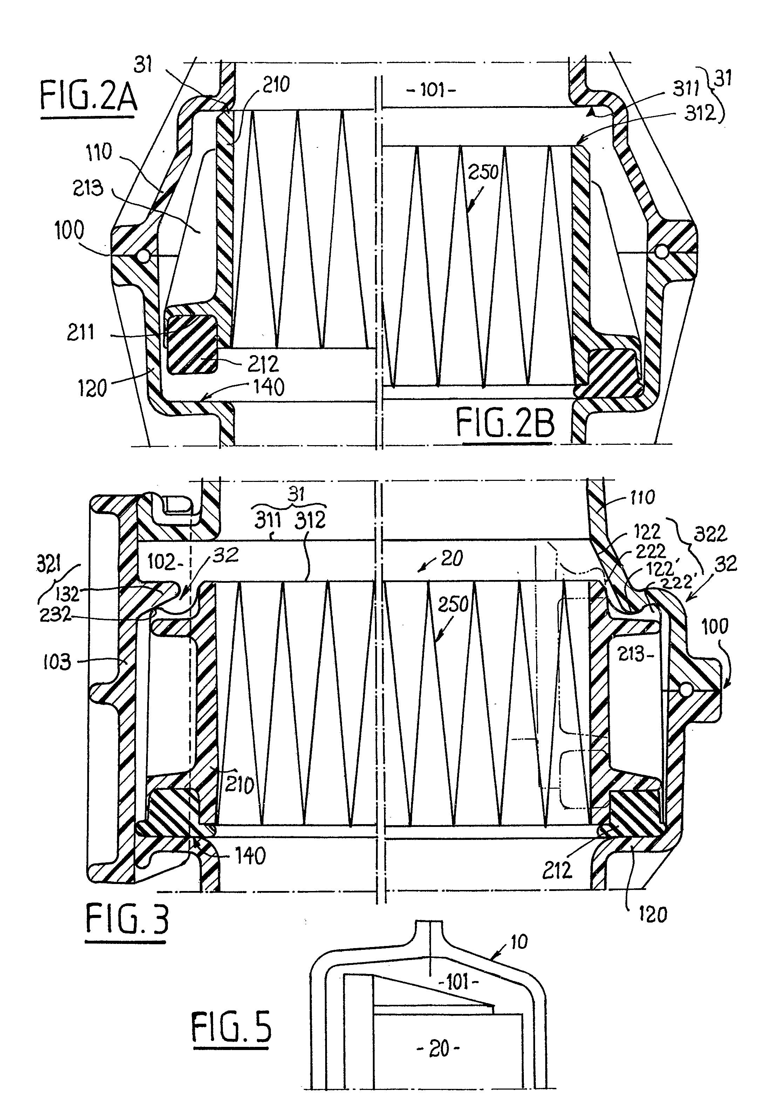

Sur les Fig.3 et 4 d'autres modes de réalisation du couvercle sont dessinés sans que leurs montages et fermoirs particuliers soient représentés ; de nombreuses solutions sont possibles et le spécialiste en la matière choisira celles qui conviennent le mieux pour le mode de réalisation adopté.

La cartouche filtrante 20 se compose d'un châssis-cadre 210 qui se présente à la manière d'une boîte parallélépipèdique sans fond ouverte sur deux de ses faces opposées. L'un des pourtours d'une de ces faces est muni d'un logement périphérique 211 telle une gorge, destiné à recevoir un joint 212 dont le rôle sera expliqué ultérieurement. Si nécessaire, ce châssis-cadre 210 est muni de nervures 213 pour en augmenter la rigidité.

Dans le châssis-cadre 210 est disposé, de manière convenable, un filtre 250 proprement dit. Ce filtre 250 est constitué d'un milieu poreux, par exemple, d'une feuille 251 multistrate qui est pliée en accordéon de manière que les arêtes 252 des plis 253 soient approximativement parallèles au plan de jonction 100.

La cartouche filtrante peut aussi être de tout autre type du commerce par exemple celui dénommé habituellement "Pocket" où le filtre 250 est autoporteur et joue aussi le rôle du châssis-cadre.

Les moyens de mise en place 30 se composent de glissières 31 et d'un dispositif de blocage 32.

Les glissières 31 sont orientées parallèlement au plan de jonction 100m de manière à permettre une translation de la cartouche filtrante 20 approximativement parallèlement à ce plan à la manière d'un tiroir, comme on le comprendra par la suite. Ces glissières sont constituées d'appuis coopérant disposés les uns 311 sur le corps 10 et les autres 312 sur le châssis-cadre 210. Ces appuis rectilignes de tout type appropriés, par exemple de sections planes ou courbes complémentaires, coopèrent à la manière de ceux d'un tiroir, pour permettre un coulissement approximativement parallèle au plan de jonction 100 tout en assurant aussi un guidage, de la cartouche pour son insertion ou son enlèvement.

Le dispositif de blocage 32 est destiné à communiquer à la cartouche filtrante 20 un déplacement approximativement perpendiculaire au plan de jonction 100, comme on le comprendra par la suite, pour assurer la mise en place en pression de la cartouche. Ce dispositif de blocage 32 comprend un groupe 321 qui permet de faire coopérer le couvercle 103 avec le châssis-cadre 210 et un autre groupe 322 qui permet de faire coopérer le corps 10 avec le châssis-cadre 210.

Comme on peut l'observer sur les diverses figures, le groupe 321 se compose d'au moins un coin 132 ou analogue porté par le couvercle 103 et d'un biseau 232 ou analogue ménagé sur celui des pourtours du châssis-cadre 210 qui est opposé au joint 212. Le groupe 322 est réalisé de manière à se comporter comme une came et, éventuellement, aussi comme une articulation. Lorsque le groupe 322 sert de came il comprend des rampes complémentaires qui coopèrent les unes avec les autres quant elles viennent en contact et qui sont disposées les unes 122 sur le corps 10 et les autres 222 sur le châssis-cadre 210.

Lorsque le groupe 322 sert aussi d'articulation il comprend de plus des protubérances complémentaires qui coopèrent quand elles viennent en contact les unes 122' associées au corps 10 et les autres 222' au châssis-cadre 210.

On décrira maintenant la manière dont on procède pour engager et mettre en place la cartouche filtrante dans le corps du filtre suivant l'invention.

De préférence, la cartouche filtrante est munie de détrompeurs, simples ou doubles, appropriés de manière que l'on ne puisse la présenter face au corps, en position d'insertion, qu'avec une seule orientation qui interdit une mauvaise disposition soit dans le sens longitudinal antéro-postérieur soit dans le sens transversal recto-verso, une autre erreur n'étant pas possible puisque la cartouche filtrante présente un châssis-cadre de configuration parallélépipèdique rectangulaire et non pas carrée. Dans les modes de réalisation des Fig.3 et 4 seul un détrompeur simple recto-verso est nécessaire car, comme on peut l'observer, les extrémités antéropostérieures des châssis-cadre 210 sont identiques. Le détrompeur recto-verso résulte par exemple de la configuration approximativement trapézoïdale donnée à la section droite comme cela ressort de la vue partielle de la Fig.5.

On ouvre le fermoir 105 du couvercle 103 et on déplace ce dernier. L'orifice 102 étant dégagé on peut accéder à la cuve 101.

La cartouche filtrante présentant son châssis-cadre 210 correctement orienté, on l'insère dans l'orifice 102.

Les appuis 311 et 312 du corps 10 et du châssis-cadre 210 viennent alors en contact et permettent au châssis-cadre de coulisser correctement à la manière d'un tiroir, approximativement parallèlement au plan de jonction 100. Lorsque le châssis-cadre est presque totalement engagé, juste avant que le dispositif de blocage 32 entre en action, il occupe les positions illustrées sur les Fig.2A, 3 (en trait discontinu) et 4A.

Comme on le voit sur la Fig.3, les rampes 122 et 222 viennent alors en contact et s'appliquent l'une contre l'autre. Lorsqu'on referme alors le couvercle 103 (flèche de la Fig.4A) son coin 132 vient prendre appui contre le biseau 232 du châssis-cadre 210 qu'il repousse d'abord vers l'intérieur puis chasse ensuite perpendiculairement à la direction du plan de joint ou inversement. En faisant ceci on exerce un effort qui fait glisser les uns contre les autres d'une part les rampes 122, 222 et les coin et biseau 132, 232 d'autre part et comprime le joint 212 contre son siège 140. On peut alors ensuite verrouiller le fermoir 105. La position du châssis-cadre dans la cuve est alors celle dessinée sur les Fig.2B, 3 et 4B.

Le joint assure outre l'étanchéité une immobilisation élastique du châssis-cadre dans la cuve.

On voit donc que la cartouche filtrante 20 a d'abord suivi une translation approximativement parallèle au plan de jonction 100 puis, ensuite, un déplacement approximativement perpendiculaire à ce dernier. Le joint 212 étant appliqué sur son siège 140, l'étanchéité est correctement assurée.

Comme on peut l'observer, pour le mode de réalisation des Fig.3 et 4, les rampes 222 et biseau 232 sont interchangeables.

Si l'on se reporte maintenant au mode de réalisation de la Fig.3, on voit que le groupe 322 du dispositif de blocage 32 présente en plus des protubérances complémentaires 122' et 222'. Lorsque le châssis-cadre 210 de la cartouche filtrante est à proximité de l'extrémité de sa course de translation les rampes 122, 222 viennent en contact comme représenté en trait discontinu et forcent le châssis-cadre à se déplacer de manière à appliquer le joint 212 contre son siège 140. En poussant plus à fond vers l'intérieur, les protubérances 122', 222' s'enclenchent et s'agrippent les unes dans les autres, comme illustré en trait continu. Lorsqu'on opère la fermeture du couvercle 103, comme précédemment indiqué, le coin 132 rencontre à nouveau le biseau 232 et fait basculer le châssis-cadre 210 autour des protubérances qui servent d'articulation pour assurer une application correcte du joint 212 contre son siège 140.

Pour procéder au dégagement de la cartouche filtrante 20 du corps 10 on procède dans l'ordre inverse de ce qui a été indiqué. On observera, toutefois que pour le mode de réalisation de la Fig.3 une fois le couvercle 103 ouvert, il faut exercer une traction pour vaincre la résistance à la séparation des protubérances encliquetées l'une dans l'autre et maintenues telles par le joint 212 élastique comprimé.

Les demi-coques 110 et 120 du corps 10 sont, par exemple, obtenues par moulage d'une matière synthétique appropriée au besoin reforcée de fibres ou d'une charge convenable.

Le châssis-cadre 210 de la cartouche 20 est, lui aussi, fabriqué s'il y a lieu par moulage comme on l'a indiqué à propos des demi-coques du corps.

Le joint 212 est fait, par exemple, en un élastomère approprié qui est s'il y a lieu collé ou autrement fixé dans son logement 211.

Le filtre 250 proprement dit est constitué par exemple d'une feuille multistrate en un matériau, par exemple non tissé, tel que ceux que l'on obtient à l'aide de fibres de matières synthétiques réparties à la manière d'un feutre.

Pour plier une telle feuille en accordéon, on y ménage des lignes d'affaiblissement ou de moindre résistance par exemple par écrasement, emboutissage, découpe ou à l'aide d'un fil chaud ou marquage par ultrasons, aux endroits où doivent se former les arêtes 252 des plis 253.

Une telle feuille ou bande avec ses lignes 252 est ensuite engagée dans un tunnel ou analogue et y est poussée par exemple par un jet d'air comprimé de manière qu'elle se plisse en accordéon suivant les lignes de moindre résistance résultant des affaiblissements 253. Une telle configuration est représentée sur les figures du dessin. Ce filtre en accordéon est ensuite fixé sur le châssis-cadre 210 par toute technique appropriée telle que le collage, le soudage, le sertissage, le surmoulage.

Selon une variante d'exécution, la cartouche filtrante 20 se compose d'un châssis-cadre 210 récupérable dans lequel vient se placer un filtre 250 amovible, consommable, qui est jeté en fin d'utilisation. Dans un tel cas, c'est ce filtre 250 amovible et consommable qui est directement surmoulé d'un joint 212 souple de configuration et nature appropriées permettant un montage simple et correct sur le châssis-cadre 210 qui n'est plus jeté mais conservé. Cette solution qui permet toujours le recours à du personnel non spécialiste est encore plus avantageuse sur le plan économique puisque seul le filtre 250 proprement dit est à remplacer.

On observera aussi que quelle que soit la solution, châssis-cadre 210 jetable ou châssis-cadre 210 récupérable, ce dernier peut être fait de manière à aussi incorporer le couvercle 103 qui n'est plus, alors, associé au corps 10.

On comprend donc tout l'intérêt du filtre à air notamment pour moteurs thermiques d'automobiles suivant l'invention puisqu'il permet de procéder à la mise en place ou à l'extraction de la cartouche filtrante amovible d'une manière simple qui ne nécessite aucun outil. De plus, lorsque le couvercle de l'orifice permettant d'accéder à la cuve est maintenu de manière imperdable au corps ·ou associé autrement au châssis-cadre, il n'y a aucun risque de laisser échapper des vis, écrous, rondelles ou autres accessoires de montage. On saisit donc que le remplacement ou l'échange d'une cartouche filtrante puisse s'opérer sans l'aide d'aucun outil, sans recourir à du personnel hautement qualifié et aussi sans risque d'erreur ou d'incident.

**Revendications**

1. Filtre à air pour moteur thermique constitué, entre autres, d'un corps (10) délimitant une cuve (101) intérieure à laquelle on accède par un orifice (102) fermé par un couvercle (103) et où débouchent une tubulure d'entrée (111) pour l'admission du gaz à filtrer et une tubulure de sortie (121) pour l'évacuation du gaz filtré et destinée à recevoir une cartouche filtrante (20) amovible interchangeable faite d'un châssis-cadre (210) avec un filtre (250) proprement dit, caractérisé en ce que le corps (10) est fait de deux demi-coques (110,120) réunies suivant un plan de jonction (100) traversant la cuve (101), en ce que l'orifice (102) pour l'introduction d'une cartouche filtrante (20) chevauche le plan de jonction (100) et en ce que des moyens de mise en place (30) sont portés par le corps (10) de manière à permettre l'insertion ou l'enlèvement de la cartouche (20) par une translation approximativement parallèle au plan de jonction (100) et sa mise en place ou son retrait par un déplacement approximativement perpendiculaire à ce plan de jonction (100).

2. Filtre à air selon la revendication 1, caractérisé en ce que chacune des demi-coques (110, 120) porte l'une des tubulures (111,121).

3. Filtre à air selon la revendication 1 ou 2, caractérisé en ce que l'une au moins des tubulures (111,121) est approximativement perpendiculaire au plan de jonction (100).

4. Filtre à air selon l'une quelconque des revendications 1 à 3, caractérisé en ce que le couvercle (103) est monté inamovible et mobile sur le corps (10).

5. Filtre à air selon la revendication 4, caractérisé en ce que le couvercle (103) est associé au corps (10) par une charnière (104) et est muni d'un fermoir (105) pour l'immobiliser en position fermée sur le corps (10).

6. Filtre à air selon l'une quelconque des revendications 1 à 3, caractérisé en ce que le couvercle (103) est porté par le châssis-cadre (210).

7. Filtre à air selon l'une quelconque des revendications 1 à 6, caractérisé en ce que les moyens de mise en place (30) comprennent des glissières (31) pour diriger la translation approximativement parallèle au plan de jonction (100) et un dispositif de blocage (32) pour provoquer le déplacement approximativement perpendiculaire au plan de jonction (100).

8. Filtre à air selon la revendication 7, caractérisé en ce que ces glissières (31) comprennent des appuis complémentaires les uns (311) portés par le corps (10) et les autres (312) par l'une au moins des demi-coques (110,120).

9. Filtre à air selon la revendication 7 ou 8, caractérisé en ce que le dispositif de blocage (32) comprend un groupe (312) destiné à faire coopérer couvercle (103) et châssis-cadre (210) et un groupe (322) destiné à faire coopérer corps (10) et châssis-cadre (210).

10. Filtre à air selon la revendication 9, caractérisé en ce que le groupe (321) comprend au moins un coin (132) porté par le couvercle (103) et un biseau (232) porté par le châssis-cadre (210).

11. Filtre à air selon la revendication 9 ou 10, caractérisé en ce que le groupe (322) comprend des cames faites de rampes portées les unes (122) par le corps (10) et les autres (222) par le châssis-cadre (210).

12. Filtre à air selon l'une quelconque des revendications 9 à 11, caractérisé en ce que le groupe (322) comprend une articulation faite de protubérances portées les unes (122') par le corps (10) et les autres (222') par le châssis-cadre (210).

13. Filtre à air selon l'une quelconque des revendications 1 à 12, caractérisé en ce que le corps (10) présente un siège de joint (140) pratiquement parallèle au plan de jonction (100).

14. Filtre à air selon l'une quelconque des revendications 1 à 13, caractérisé en ce que le châssis-cadre (210) se présente à la manière d'une boîte généralement parallélépipédique sans fond dont l'un des pourtours est destiné à recevoir sur l'une de ses faces un joint (212).

Filtre à air selon la revendication 14, caractérisé en ce que ce pourtour est équipé d'un logement (211) pour le joint (212).

16. Filtre à air selon l'une quelconque des revendications 10 à 15, caractérisé en ce que celui des pourtours qui est opposé à celui destiné à recevoir le joint (212) est équipé du biseau (232) et des rampes (222).

17. Filtre à air selon l'une quelconque des revendications 1 à 16, caractérisé en ce que le châssis-cadre (210) présente des extrémités antéro-postérieures identiques.

18. Filtre à air selon l'une quelconque des revendications 1 à 17, caractérisé en ce que le corps (10) et le châssis-cadre (210) présentent des sections droites à profils complémentaires approximativement trapézoïdaux.

19. Filtre à air selon l'une quelconque des revendications 1 à 18, caractérisé en ce que le filtre (250) est fait à partir d'une feuille ou bande pliée en accordéon dont les arêtes des plis (252) sont approximativement parallèles au plan de jonction (100).

20. Filtre à air selon l'une quelconque des revendications 1 à 19, caractérisé en ce que le filtre (250) est logé d'une manière amovible dans le châssis-cadre (210).

21. Filtre à air selon l'une quelconque des revendications 1 à 20, caractérisé en ce que le filtre (250) porte le joint (212).

EP 0 334 719 A1

## FIG.1

## FIG. 4A

## FIG.4B

FIG.2A
FIG.2B
FIG.3
FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-1 933 100 (FRAM)<br>* revendication 1; figures 1-3,6-8 *<br>--- | 1,4,6,<br>19-21 | B 01 D 46/52<br>F 02 M 35/02 |
| A | GB-A-1 165 555 (FORD MOTOR)<br>* figures 1-3 *<br>--- | 1-4,6 | |
| A | DE-A-1 576 508 (W. CAMBEIS)<br>* figure 1 *<br><br>--- | 1-3,13,<br>14,18,<br>19 | |
| A | DE-A-1 607 708 (FARR)<br>* page 7, alinéa 2; figures 4-8 *<br><br>--- | 1,7-11,<br>14,15,<br>19-21 | |
| A | FR-A- 659 243 (ETABL. TECALEMIT)<br>* figures 1-3 *<br>--- | 1,4,5 | |
| A | DE-A-3 128 252 (DAIMLER-BENZ)<br>* figures 1,2 *<br>--- | 7 | |
| A | US-A-1 958 735 (W.H. WORTHINGTON)<br>* figure *<br>----- | 1 | DOMAINES TECHNIQUES RECHERCHES (Int. Cl.4)<br><br>B 01 D 46/52<br>F 02 M 35/02<br>F 02 M 35/024<br>F 02 M 35/08 |

**Le présent rapport a été établi pour toutes les revendications**

| Lieu de la recherche | Date d'achèvement de la recherche | Examinateur |
|---|---|---|
| BERLIN | 05-05-1989 | KUEHN P |

EPO FORM 1503 03.82 (P0402)